# FASCICULE DE BREVET EUROPEEN

(11) **EP 3 365 727 B1**
(45) Date de publication et mention de la délivrance du brevet: **28.10.2020**
(21) Numéro de dépôt: 16809901.8
(22) Date de dépôt: 19.10.2016
(51) Int. Cl.: G02F 1/35

(54) **SYSTÈME OPTIQUE NON LINÉAIRE DE GÉNÉRATION OU D'AMPLIFICATION D'IMPULSIONS LUMINEUSES PAR MÉLANGE À N ONDES COMPORTANT UN DISPOSITIF DE MODULATION RAPIDE**
NICHTLINEARES OPTISCHES SYSTEM ZUR ERZEUGUNG ODER VERSTÄRKUNG VON LICHTIMPULSEN DURCH N-WELLEN-MISCHUNG MIT EINER SCHNELLEN MODULATIONSVORRICHTUNG
NONLINEAR OPTICAL SYSTEM FOR GENERATING OR AMPLIFYING LIGHT PULSES BY N-WAVE MIXING, INCLUDING A FAST MODULATING DEVICE

(30) Priorité: 19.10.2015 FR 1559950
(43) Date de publication de la demande: 29.08.2018
(73) Titulaire: Amplitude Systemes, 33600 Pessac (FR)
(72) Inventeur: MORIN, Franck, 33610 Canéjan (FR); HONNINGER, Clemens, 33610 Cestas (FR); DELAIGUE, Martin, 33100 Bordeaux (FR)
(74) Mandataire: Jacobacci Coralis Harle
(86) Numéro de dépôt international: PCT/FR2016/052698
(87) Numéro de publication internationale: WO 2017/068281

(56) Documents cités:
- WO-A1-2009/079759
- WO-A1-2013/029154
- US-A1- 2013 163 071
- US-B1- 6 498 801
- US-B1- 8 781 271
- HUAN ZHAO ET AL: "Sum-frequency generation between an actively synchronized ultrashort Ti:sapphire laser and a Nd:YVO4 laser", JOURNAL OF THE OPTICAL SOCIETY OF AMERICA - B, OPTICAL SOCIETY OF AMERICA, WASHINGTON, US, vol. 25, no. 7, 24 avril 2008 (2008-04-24) , pages B39-B43, XP007907952, ISSN: 0740-3224, DOI: 10.1364/JOSAB.25.000B39 [extrait le 2008-04-24]
- S. A. CROOKER ET AL: "Femtosecond synchronization of two passively mode-locked Ti:sapphire lasers", REVIEW OF SCIENTIFIC INSTRUMENTS., vol. 67, no. 6, 11 mars 1996 (1996-03-11), pages 2068-2071, XP055268635, US ISSN: 0034-6748, DOI: 10.1063/1.1147016

## Description

### DOMAINE TECHNIQUE AUQUEL SE RAPPORTE L'INVENTION

La présente invention se rapporte à un système optique non linéaire de génération ou d'amplification d'impulsions lumineuses, de forte puissance et/ou de forte énergie dans le domaine spectral ultraviolet, visible ou infrarouge (UV, visible, IR).

Plus précisément, l'invention concerne un dispositif de modulation contrôlée et rapide d'un train d'impulsions issu d'un système optique non linéaire opérant par mélange d'au moins trois ondes.

Un système optique non linéaire de génération ou d'amplification d'impulsions ultra-courtes émet généralement à une cadence de répétition élevée, comprise en général entre 50kHz et 100MHz.

Dans le présent document, on entend par impulsions lumineuses des impulsions brèves de durée inférieure à la milliseconde ou ultra-brèves des impulsions de durée picoseconde, sub-picoseconde ou femtoseconde. On entend par impulsion de forte puissance, une impulsion lumineuse ayant une puissance crête comprise entre 1 kW et 1 GW et, de préférence, supérieure ou égale à 1 MW, et par impulsion de forte énergie une impulsion lumineuse ayant une énergie comprise entre 100 microjoules et 1 kilojoule et, de préférence, supérieure ou égale à 1 millijoule.

### ARRIERE-PLAN TECHNOLOGIQUE

Il existe différents systèmes optiques non-linéaires de mélange à N ondes, où N représente un nombre entier naturel supérieur ou égal à trois. En optique non-linéaire, le mélange à N ondes recouvre en particulier le mélange à trois ondes, où un transfert d'énergie a lieu entre trois ondes électromagnétiques interagissant dans un milieu non-linéaire, et le mélange à quatre ondes, où un transfert d'énergie a lieu entre quatre ondes électromagnétiques interagissant dans un milieu non-linéaire. Le mélange à trois ondes trouve, entre autres, des applications dans la somme de fréquence, en particulier le doublage de fréquence, la différence de fréquence et l'amplification paramétrique optique.

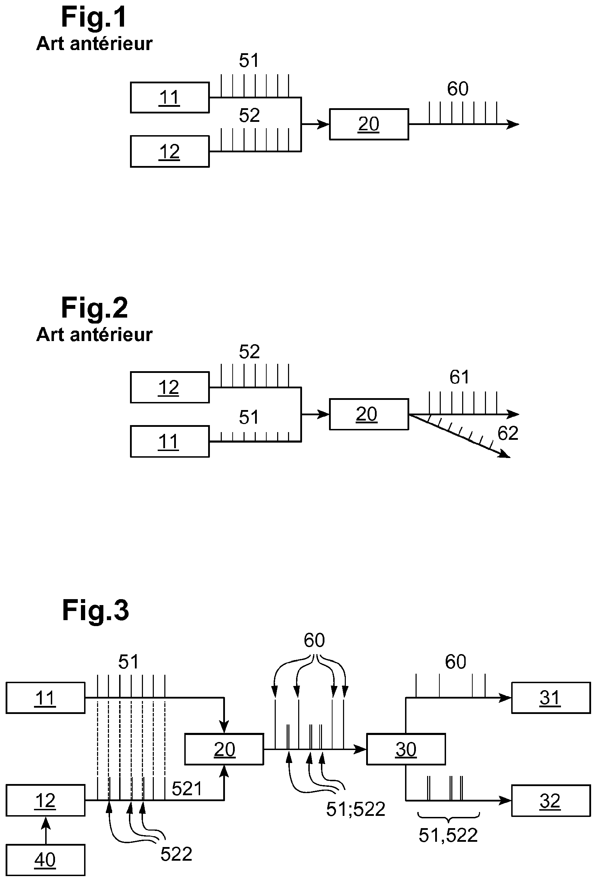

La figure 1 illustre schématiquement un système optique non linéaire classique configuré pour le doublage de fréquence optique, aussi appelé la génération de seconde harmonique. Une première source laser 11 génère un premier signal source 51 formé d'impulsions lumineuses à une fréquence de répétition donnée. Une deuxième source laser 12 génère un deuxième signal source 52 formé d'impulsions lumineuses synchronisées sur les impulsions lumineuses du premier signal source 51. Les deux sources lasers 11, 12 ont ici la même longueur d'onde. Les deux signaux d'impulsions lumineuses 51, 52 sont dirigés vers un milieu optique non linéaire 20. Le milieu optique non-linéaire peut être un milieu solide, un cristal par exemple de LBO, BBO, KDP, ou une fibre optique ou encore un milieu gazeux. La superposition spatiale et temporelle des deux signaux source 51, 52 au sein du milieu optique non linéaire 20 permet de générer un signal de sortie 60 constitué d'impulsions lumineuses à une fréquence optique égale au double de la fréquence optique des deux sources laser 11, 12 et à la même fréquence de répétition que les deux sources 11, 12.

La figure 2 illustre schématiquement un autre exemple de système optique non linéaire configuré pour l'amplification paramétrique optique d'impulsions lumineuses. Les mêmes signes de référence représentent des composants analogues à ceux de la figure 1. Les deux sources lasers 11, 12 ont en général la même fréquence de répétition, toutefois la durée respective des impulsions n'est pas nécessairement la même. A la différence de la figure 1, sur la figure 2, les deux sources lasers 11, 12 n'ont en général pas la même longueur d'onde. Un faisceau pompe 52 composé d'impulsions de forte énergie est envoyé dans un milieu optique non linéaire 20 pour être combiné avec un faisceau signal 51 de plus faible énergie. Sous certaines conditions, et en particulier de superposition spatiale et temporelle des impulsions du faisceau pompe 12 et du faisceau signal 11 dans le milieu optique non linéaire 20, un transfert d'énergie peut se produire du faisceau pompe 12 vers le faisceau signal 11, générant ainsi un faisceau amplifié 61 accompagné par l'émission d'un faisceau résiduel 62 de faible énergie. Cette technique d'amplification paramétrique optique permet donc l'amplification du signal 51 pour former le signal amplifié 61.

Les différents processus physiques de mélange à N ondes sont des phénomènes instantanés d'optique non linéaire qui requièrent la superposition spatiale et temporelle de toutes les impulsions mises en jeux.

La cadence de tir des impulsions de sortie est souvent fixée en fonction de l'architecture utilisée et des caractéristiques souhaitées pour le faisceau d'impulsions lumineuses. L'architecture « Master Oscillator, Power Amplifier » (MOPA) est communément utilisée pour réaliser des sources lasers d'impulsions lumineuses de forte puissance. Dans ce cas, l'oscillateur maître de la source laser génère des impulsions source à une cadence donnée, puis ces impulsions source sont amplifiées dans un ou plusieurs étages d'amplification.

Le document "Sum-frequency génération between an actively synchromized ultrashort Ti:sapphire laser and a Nd:YVO4 laser", de Huan Zhao et al publié le 24 avril 2008 dans Journal of the optical Society of America, vol. 25, n °7, décrit un système optique non-linéaire pour la génération d'impulsions ultra-courtes utilisant deux lasers séparés recombinés dans un cristal non-linéaire, l'un des deux faisceau étant décalé temporellement par rapport à l'autre. Or pour certaines applications, l'utilisateur peut avoir besoin de faire varier la cadence des impulsions du signal issu de la conversion optique non linéaire ou même d'interrompre complètement puis de reprendre les tirs.

La commande ou le contrôle de train d'impulsions générées ou amplifiées dans un système optique non linéaire peut avoir différentes finalités. Dans certains cas, on souhaite disposer d'un obturateur rapide, pour éteindre ou allumer le faisceau d'une impulsion à l'autre, en sortie du système de mélange à N ondes. Dans d'autres cas, on souhaite disposer d'un réducteur de fréquence, pour générer un signal de sortie à une fréquence de répétition inférieure à celle de l'oscillateur de la source laser, par exemple en sélectionnant une impulsion sur 2, sur 3 ou sur N. Par ailleurs, on souhaite disposer d'un système de commande permettant de générer une impulsion à la demande, l'émission d'une impulsion étant déclenchée à la demande de l'utilisateur via un signal de commande électronique.

Une technique connue consiste à modifier la fréquence de tir en amont du système de conversion optique non linéaire. Cependant, cette modification de fréquence entraîne généralement des modifications des caractéristiques du faisceau de sortie (énergie et durée des impulsions, forme et qualité). Dans certaines architectures, la modification de la fréquence de tir avant le milieu optique non linéaire (ONL) peut produire des impulsions surpuissantes et provoquer la dégradation voire la destruction du milieu optique non linéaire.

Une autre technique classiquement utilisée pour contrôler le train d'impulsion consiste à placer un modulateur optique, de type acousto-optique ou électro-optique, en sortie du système de conversion optique non linéaire. Un tel modulateur optique permet, lorsqu'il est activé, de modifier les propriétés des impulsions qui le traversent, de façon à pouvoir ensuite les séparer spatialement des autres impulsions. Cependant, la vitesse d'un modulateur électro-optique ou acousto-optique est actuellement limitée à une cadence de l'ordre de 10 MHz. D'autre part, un modulateur optique placé à la sortie d'un système de conversion optique non linéaire induit des pertes de puissance. Ces pertes sont de l'ordre de de 10 à 20% pour un modulateur acousto-optique et respectivement de l'ordre de 5% pour un modulateur électro-optique. Enfin, dans le cas de lasers de forte puissance, le faisceau laser peut endommager le modulateur optique s'il est placé en fin de chaine d'amplification. Disposer un modulateur optique en sortie d'un système convertisseur optique non linéaire présente donc des limitations importantes.

### OBJET DE L'INVENTION

Afin de remédier à l'inconvénient précité de l'état de la technique, la présente invention propose un système optique non linéaire de génération ou d'amplification d'impulsions lumineuses par mélange à N ondes, où N représente un nombre entier naturel supérieur ou égal à trois, comportant un milieu optique non linéaire adapté pour recevoir au moins une première impulsion lumineuse et une deuxième impulsion lumineuse ayant des durées respectives du même ordre de grandeur.

Plus particulièrement, on propose selon l'invention un système optique non linéaire de génération ou d'amplification d'impulsions lumineuses comportant un dispositif de modulation d'un retard temporel entre la deuxième impulsion lumineuse et la première impulsion lumineuse dans le milieu optique non linéaire, le dispositif de modulation du retard temporel étant disposé en amont du milieu optique non linéaire, et le dispositif de modulation étant adapté pour recevoir la première impulsion lumineuse et la deuxième impulsion lumineuse synchronisées et pour commuter le retard temporel entre au moins une première valeur de retard et, respectivement, une deuxième valeur de retard, de manière à moduler la génération ou l'amplification d'une impulsion lumineuse par mélange à N ondes desdites au moins une première impulsion lumineuse et une deuxième impulsion lumineuse dans le milieu optique non linéaire.

Ce dispositif de modulation du retard temporel permet avantageusement de contrôler la cadence du train d'impulsion de sortie, générées par mélange à N ondes. Ce système est uniquement limité par la vitesse de la commutation du dispositif de modulation du retard temporel utilisé. Ce système à impulsions converties non linéairement avec modulation du retard temporel permet de générer à la demande une impulsion par mélange à N ondes, de la cadence maximale de la source jusqu'à une impulsion unique et l'extinction complète du signal généré par mélange à N ondes.

De façon préférentielle, le dispositif de modulation du retard temporel est commutable entre la première valeur de retard et la deuxième valeur de retard, la première valeur de retard étant configurée de manière à ce que lesdites au moins une première impulsion lumineuse et une deuxième impulsion lumineuse se superposent spatialement et temporellement dans le milieu optique non linéaire, et le milieu optique non linéaire étant configuré pour générer ou amplifier une impulsion lumineuse par mélange à N ondes desdites au moins une première impulsion lumineuse et une deuxième impulsion lumineuse, où N est un nombre entier supérieur ou égal à trois, et la deuxième valeur de retard étant configurée de manière à ce que ladite deuxième impulsion lumineuse présente un retard temporel par rapport à ladite première impulsion lumineuse dans le milieu optique non linéaire, la deuxième valeur de retard étant adaptée pour limiter la génération ou l'amplification par mélange à N ondes desdites au moins une première impulsion lumineuse et une deuxième impulsion lumineuse dans le milieu optique non linéaire.

Dans le présent document, limiter la génération ou l'amplification par mélange à N ondes signifie limiter une impulsion générée par mélange à N ondes à une amplitude ou une intensité prédéterminée, par exemple de 50% de l'impulsion générée par mélange à N ondes pour la première valeur du retard, ou à moins de 10 %, et de préférence à moins de 1% ou moins de 1 pour mille.

Ce dispositif de modulation du retard temporel permet avantageusement de contrôler la cadence du train d'impulsion de sortie. Il est uniquement limité par la vitesse de la commutation du dispositif de modulation du retard temporel utilisé. Ce laser à impulsions converties non linéairement avec modulation du retard temporel permet de générer à la demande une impulsion par mélange à N ondes, de la cadence maximale de la source jusqu'à une impulsion unique et l'extinction complète du signal généré par mélange à N ondes.

Le dispositif de modulation du retard temporel ne génère aucune perte de puissance en sortie du milieu optique non linéaire, puisque le retard temporel est ajusté en amont du milieu optique non linéaire. Ce dispositif de modulation n'est pas limité en puissance ou en énergie des impulsions. Ce dispositif de modulation est indépendant du type de conversion non linéaire réalisé dans le milieu optique non linéaire, et de la durée des impulsions générées ou amplifiées.

En outre, le dispositif de modulation est indépendant de la longueur d'onde générée par le processus non linéaire, ce qui peut être très avantageux dans le cas d'un système accordable en fréquence.

D'autres caractéristiques non limitatives et avantageuses du système comprenant un dispositif de modulation du retard temporel conforme à l'invention, prises individuellement ou selon toutes les combinaisons techniquement possibles, sont les suivantes :
- le système comprend un dispositif de filtrage optique disposé en sortie du milieu optique non linéaire, le dispositif de filtrage optique étant configuré pour séparer spatialement, sur une sortie, l'impulsion lumineuse générée ou amplifiée par mélange à N ondes et, sur une autre sortie, la première impulsion lumineuse et/ou la deuxième impulsion lumineuse;
- le milieu optique non linéaire est configuré pour générer une autre impulsion lumineuse par somme de fréquence, la fréquence optique de l'impulsion lumineuse générée par somme de fréquence étant égale à la somme des fréquence optique desdites au moins une première impulsion lumineuse et une deuxième impulsion lumineuse, et le dispositif de filtrage optique comporte un filtre spectral adapté pour séparer la fréquence optique somme des fréquences optiques respectives desdites au moins une première impulsion lumineuse et une deuxième impulsion lumineuse ;
- le système comprend un premier amplificateur optique disposé pour recevoir un premier signal source et former la première impulsion lumineuse et un deuxième amplificateur optique disposé pour recevoir un deuxième signal source et former la deuxième impulsion lumineuse ;
- le système comporte une première source adaptée pour générer le premier signal source et une deuxième source adaptée pour générer le deuxième signal source, et un dispositif de synchronisation du premier signal source par rapport au deuxième signal source ;
- le dispositif de modulation est intégré à la deuxième source ;
- le système comporte une source adaptée pour générer un signal lumineux d'impulsions source et un séparateur de faisceau configuré pour séparer le signal lumineux d'impulsions source et pour former le premier signal source et le deuxième signal source ;
- le système comporte en outre un réducteur de cadence disposé entre la source et le séparateur de faisceau ;
- le dispositif de modulation du retard temporel comporte un premier sélecteur d'impulsion disposé sur un trajet optique du premier signal source et un deuxième sélecteur d'impulsion disposé sur le trajet optique du deuxième signal source;
- le dispositif de modulation du retard temporel comporte une ligne à retard optique variable disposée sur le trajet optique du deuxième signal source ;
- la ligne à retard optique variable comprend un modulateur acousto-optique ou électro-optique configuré pour commuter le deuxième signal source soit vers un premier chemin optique, présentant une première valeur de retard optique associée à la première valeur de retard temporel, soit vers un deuxième chemin optique, présentant une deuxième valeur de retard optique associée à la deuxième valeur de retard temporel.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un système de conversion optique non linéaire configuré pour le doublage de fréquence, selon l'art antérieur ;
- la figure 2 représente un système optique non linéaire configuré pour l'amplification paramétrique optique, selon l'art antérieur ;
- la figure 3 représente schématiquement un système optique non linéaire de mélange à N ondes intégrant un dispositif de modulation rapide de cadence des impulsions de sortie, selon un premier mode de réalisation de l'invention ;
- la figure 4 représente schématiquement un autre système optique non linéaire de mélange à N ondes intégrant un autre dispositif de modulation rapide de cadence des impulsions de sortie selon un deuxième mode de réalisation de l'invention ;
- la figure 5 représente schématiquement un système optique non linéaire de mélange à N ondes intégrant un autre dispositif de modulation rapide de cadence des impulsions de sortie selon une variante du deuxième mode de réalisation;
- la figure 6 illustre un exemple de ligne à retard optique commutable selon un mode de réalisation de l'invention ;
- la figure 7 représente schématiquement un système optique non linéaire de mélange à quatre ondes intégrant un dispositif de modulation rapide de cadence des impulsions de sortie selon un autre mode de réalisation de l'invention.

### Dispositif

Sur la figure 3, on a représenté un système optique non linéaire de mélange à N ondes, comprenant une première source laser 11, une deuxième source laser 12, un milieu optique non linéaire 20 et un filtre optique 30.

La première source laser 11 émet un premier signal d'impulsions source 51, et la deuxième source laser 12 émet un deuxième signal d'impulsions source 52. La deuxième source laser 12 est synchronisée avec la première source laser 11. Les impulsions des signaux d'impulsions source 51, respectivement 52 ont une durée D qui est en général du même ordre de grandeur, mais pas nécessairement la même durée. De façon avantageuse, les signaux d'impulsions source 51, 52 ont une cadence de répétition identique. De façon alternative, la cadence de répétition d'une source laser 11 est un multiple entier de la cadence de répétition de l'autre source laser 12. On suppose ici que le chemin optique allant de la première source laser 11 au milieu optique non linéaire 20 a la même longueur que le chemin optique allant de la deuxième source laser 12 au milieu optique non linéaire 20.

Dans le présent document, on entend par impulsions synchronisées des impulsions qui présentent un défaut de synchronisation résiduel (ou « jitter » en anglais) restant inférieur en valeur absolue à 10%, et de préférence à 5%, ou mieux inférieur à 1% ou même 0,5% de la durée D des impulsions sur un intervalle temporel de quelques minutes à quelques heures. Par exemple, des impulsions ayant une durée de 300 fs sont synchronisées de manière à présenter un défaut de synchronisation résiduel inférieur à 30fs sur une période d'utilisation du laser allant de quelques minutes à quelques heures. Idéalement, le défaut de synchronisation résiduel des impulsions est nul.

Le système de la figure 3 comporte en outre un dispositif de contrôle et de commande du retard temporel 40, de type électronique ou électro-optique, intégré à la deuxième source laser 12. Le dispositif de contrôle et de commande du retard temporel 40 permet de contrôler le retard temporel d'une impulsion du deuxième signal 52 par rapport à une impulsion du premier signal 51 au niveau du milieu optique non linéaire. Plus précisément, le dispositif de contrôle et de commande du retard temporel 40 permet d'appliquer soit une première valeur de retard temporel soit une deuxième valeur de retard temporel. La première valeur de retard, notée R1, correspond à un retard inférieur, en valeur absolue, à la durée D des impulsions source et de préférence nul (ou égal à un multiple de la période de répétition des signaux source 51, 52),ou autrement dit: |R1|<D (modulo T). La deuxième valeur de retard, notée R2, correspond à un retard non nul, supérieur, en valeur absolue, à la durée D des impulsions source et inférieur à la période de répétition T des signaux source 51, 52 diminuée de la durée D d'une impulsions lumineuse (modulo la période de répétition T des impulsions), ou autrement dit : D< |R2| (modulo T).

Ainsi, lorsque le retard temporel est égal à la première valeur, R1, une impulsion du premier signal source 51 et une autre impulsion du deuxième signal source 52 se superposent temporellement et spatialement dans le milieu optique non linéaire 20, de manière à générer une impulsion 60 par mélange d'onde (par exemple par conversion de fréquence).

En revanche, lorsque le retard temporel est égal à la deuxième valeur, R2, une impulsion du premier signal source 51 et une impulsion retardée 522 du deuxième signal source n'ont aucun recouvrement temporel dans le milieu optique non linéaire 20, si bien qu'aucun mélange d'onde ne peut se produire.

Ainsi, en commutant rapidement le retard temporel d'une deuxième valeur (par exemple un retard R2 non nul) à une première valeur (par exemple un retard R1 nul), on déclenche à la demande l'émission d'une impulsion 60 par mélange d'onde dans le milieu optique non-linéaire 20. Inversement, en commutant rapidement le retard temporel d'une première valeur (retard R1 nul) à une deuxième valeur (retard R2 non nul, par exemple égal à 2· *D*), on stoppe instantanément le mélange d'onde dans le milieu optique non-linéaire 20. La modulation du retard temporel est plus rapide que la fréquence de répétition des impulsions.

Le dispositif de modulation du retard temporel de la deuxième source 12 permet de changer la fréquence de répétition des impulsions converties non linéairement en sortie du milieu optique non linéaire 20.

Lorsque deux impulsions 51 et 52 générées par la première source laser 11 et respectivement la deuxième source laser 12 arrivent simultanément dans le milieu optique non linéaire 20, il y a génération d'une impulsion 60 par mélange d'onde. Dans le cas où le milieu optique non linéaire 20 est configuré pour un mélange d'onde par conversion de fréquence, par exemple pour la génération de fréquence somme, l'impulsion 60 a une fréquence optique égale à la somme des fréquences optiques respectives des impulsions source 51 et 52.

Au contraire, lorsqu'une impulsion retardée 522 issue la deuxième source laser 12 présente, dans le milieu optique non linéaire 20, un retard temporel R2 par rapport à une impulsion 51 de la première source laser 11, ce retard temporel étant supérieur ou égal à la durée D de l'impulsion source 51 et/ou 522, et inférieur ou égal à T-D, l'impulsion lumineuse 51 de la première source ne peut pas interagir avec l'impulsion retardée 522 de la deuxième source dans le milieu optique non linéaire 20 et les impulsions 51 et 522 sont transmises sans générer de signal par mélange d'onde.

Un filtre optique 30 en sortie du milieu optique non linéaire 20 est adapté pour séparer spatialement vers une sortie 31 le signal d'impulsion lumineuse 60 généré par mélange d'onde et respectivement vers une autre sortie 32 les signaux source 51, 522 n'ayant pas interagi par mélange d'onde dans le milieu optique non linéaire 20.

Le filtre optique 30 est sélectionné parmi un filtre spectral et/ou polarisant en fonction des propriétés des signaux source 51, 52 et du ou des signaux 60 générés ou amplifié par mélange d'onde.

De manière alternative, dans le cas où la longueur du chemin optique allant de la première source laser 11 au milieu optique non linéaire 20 est différente de la longueur du chemin optique allant de la deuxième source laser 12 au milieu optique non linéaire 20, le retard appliqué à la deuxième source est adapté pour commuter entre une première valeur R1 et une deuxième valeur R2. Plus précisément, la première valeur R1 est déterminée en fonction de la différence de chemin optique de manière à ce que les impulsions source 51, 521 se superposent spatialement et temporellement dans le milieu optique non linéaire 20 avec un retard temporel relatif inférieur à la durée d'une impulsion. Et respectivement, la deuxième valeur R2 est déterminée en fonction de la différence de chemin optique de manière à ce que les impulsions source 51, 522 présentent, dans le milieu optique non linéaire 20, un retard temporel relatif supérieur ou égal à la durée d'une impulsion et inférieur ou égal à la période de répétition T diminuée de la durée d'une impulsion.

La modulation du retard temporel de chaque impulsion 52 émise par la deuxième source 12 permet de contrôler le train d'impulsion issu de l'étage de conversion non linéaire de manière très rapide, sans affecter les propriétés des impulsions (durée, énergie, forme spatiale...) et sans perte de puissance.

Cette modulation du retard entre les impulsions lumineuses 51, 52 en amont du milieu optique non linéaire 20 présente de nombreux avantages :
- la vitesse du contrôle sur le train d'impulsions 60 de sortie est uniquement limitée par la vitesse de commutation de la ligne à retard utilisée ;
- cette modulation permet de générer des impulsions par mélange à N ondes à la demande, de la cadence maximale des sources jusqu'à une impulsion unique et jusqu'à l'extinction complète des impulsions générées ou amplifiées par mélange à N ondes dans le milieu optique non linéaire.

Le dispositif de modulation du retard peut être réalisé sous forme d'une ligne à retard variable très compacte et bon marché.

Le dispositif de modulation du retard n'est pas limité en puissance ou en énergie des impulsions.

Le dispositif de modulation du retard est indépendant du type de conversion non linéaire par mélange à N ondes réalisé dans le milieu optique non linéaire. Enfin, le dispositif de modulation du retard est indépendant de la longueur d'onde des impulsions générées.

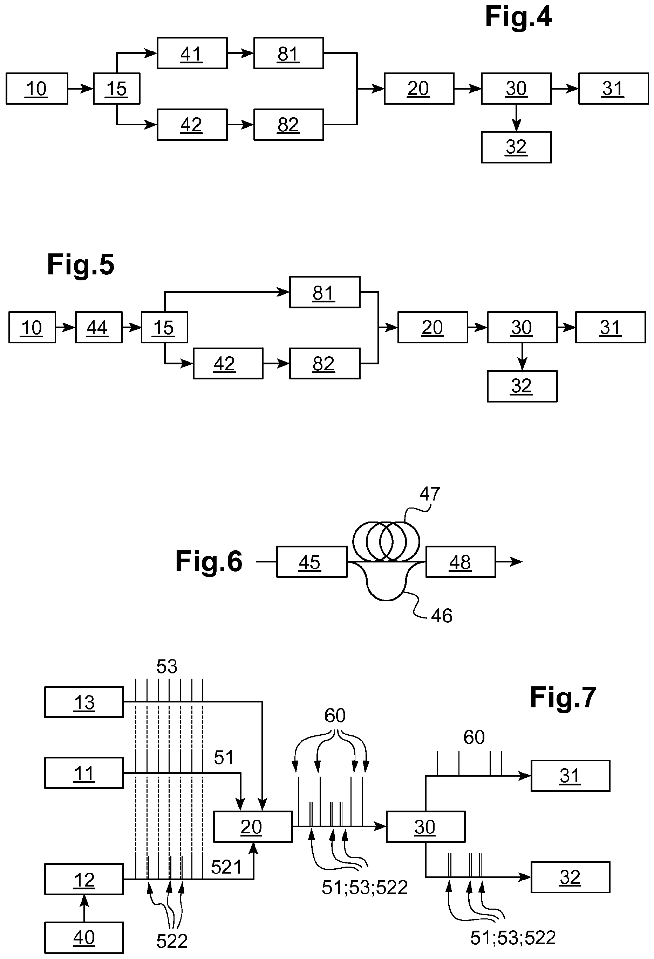

Le dispositif de modulation du retard temporel peut se baser sur différentes techniques détaillées en lien avec les figures 4 à 6.

La figure 4 illustre un exemple de réalisation comportant un seul oscillateur 10 comme alternative plus simple à deux oscillateurs 11, 12 synchronisés. Le système optique non linéaire comprend une source 10, un séparateur optique de faisceau 15, une première voie comprenant un premier sélecteur d'impulsion 41 disposé en amont d'un premier amplificateur optique 81, une deuxième voie comprenant un deuxième sélecteur d'impulsion 42 disposé en amont d'un deuxième amplificateur optique 82. Le système optique non linéaire comprend en outre un milieu optique non linéaire 20 et un filtre 30 analogues à ceux de la figure 3.

Sur la figure 4, le séparateur optique de faisceau 15 sépare le faisceau source issu de l'oscillateur 10 de manière à former un premier et un deuxième faisceau source. Le séparateur optique de faisceau 15 peut être choisi parmi un séparateur en amplitude, par exemple une lame partiellement réfléchissante, séparateur en polarisation, ou séparateur en longueur d'onde. Dans un exemple de réalisation, on utilise un oscillateur 10 à spectre très large et un filtre spectral, par exemple un miroir dichroïque, pour séparer spectralement le premier et le deuxième faisceau source.

Le premier sélecteur d'impulsion (pulse-picker) 41 diminue la cadence Fosc du premier faisceau source à une cadence d'opération Frep1 du premier amplificateur optique 81 (Frep1=Fosc/N avec N>1). De manière analogue, le second sélecteur d'impulsion 42 diminue la cadence Fosc du deuxième faisceau source à une cadence d'opération Frep2 du deuxième amplificateur optique 82 (Frep12=Fosc/N' avec N'>1). Les deux amplificateurs optiques 81, 82 ne fonctionnent pas nécessairement à la même cadence. La cadence Frep1 d'un amplificateur optique peut être un sous-multiple de la cadence Frep2 de l'autre amplificateur optique. Dans un cas particulier, les deux amplificateurs optiques fonctionnent à la même cadence d'opération Frep.

Le milieu optique non linéaire 20 reçoit un premier signal source en sortie du premier amplificateur optique 81 et respectivement un deuxième signal source en sortie du deuxième amplificateur optique 82. Le milieu optique non linéaire 20 et le dispositif de filtrage optique 30 fonctionnent de manière analogue à la figure 3.

Lorsque le premier et le deuxième sélecteur d'impulsion 41, 42 sélectionnent chacun une impulsion de l'oscillateur source 10, de manière à ce que ces deux impulsions se superposent spatialement et temporellement dans le milieu optique non-linéaire 20, compte tenu des longueurs respectives des chemins optiques des deux voies, la conversion non linéaire a lieu dans le milieu optique non linéaire 20. Lorsque les chemins optiques des deux voies sont de même longueur, il suffit de sélectionner deux impulsions issues d'une même impulsion de l'oscillateur source 10. Au contraire, lorsque les chemins optiques des deux voies sont de longueur différente, on sélectionne spécialement deux impulsions issues d'impulsions source différentes pour compenser un retard dans une des deux lignes d'amplification et obtenir une superposition spatiale et temporelle des impulsions dans le milieu optique non linéaire 20.

Lorsque l'on veut éteindre une impulsion d'un signal 60 converti non linéairement en sortie du milieu optique non linéaire 20, il suffit de sélectionner une impulsion du premier signal source 51 incidente sur le milieu optique non linéaire à un instant t au moyen du premier sélecteur d'impulsion 41 et de configurer le deuxième sélecteur d'impulsion 42 pour ne pas sélectionner une impulsion du deuxième signal source 52 incidente sur le milieu optique non linéaire à ce même instant t, mais par exemple pour sélectionner une impulsion du deuxième signal source 52 qui est incidente sur le milieu optique non linéaire à un instant t + 1/Fosc. Lorsque l'impulsion du premier signal source 51 et l'impulsion du deuxième signal source 52 sont séparées temporellement de 1/Fosc dans le milieu optique non linéaire 20, aucune conversion optique non linéaire n'a lieu dans le milieu optique non linéaire 20.

Avantageusement, ce dispositif de modulation du retard ne génère aucune perte de puissance en sortie d'amplificateur 81, 82. La charge thermique des deux amplificateurs 81, 82 reste identique jusqu'au milieu optique non linéaire 20.

La figure 5 représente un autre mode de réalisation utilisant une seule ligne à retard optique 42 commandée sur une des deux voies en amont du milieu optique non linéaire 20. Dans cette configuration, les impulsions issues d'un oscillateur 10 passent par un réducteur de cadence 44. Un séparateur optique de faisceau sépare, par exemple en amplitude, en polarisation et/ou en longueur d'onde, le signal source en un premier et respectivement un deuxième signal source destinés à être amplifiées simultanément dans un premier et respectivement un deuxième amplificateur optique 81, 82 disposés sur des voies en parallèle. Dans la deuxième voie, on utilise une ligne à retard optique variable 42 qui permet de commander le retard optique de la deuxième voie par rapport à la première voie. La ligne à retard optique variable 42 permet de commander la valeur du retard appliqué à une impulsion amplifiée deuxième amplificateur optique 81, 82 par commutation de ce retard entre deux valeurs prédéterminées R1, R2.

La figure 6 représente un exemple de ligne à retard optique variable, commutable entre une première valeur de retard optique et une deuxième valeur de retard optique. Un modulateur optique 45, de type électro-optique ou acousto-optique, permet d'orienter une impulsion soit vers un premier chemin optique 46 soit vers un deuxième chemin optique 47. Les premier et deuxième chemins optiques 46, 47 sont configurés pour présenter une longueur différente l'une de l'autre. Les premier et deuxième chemins optiques 46, 47 sont par exemple à base de fibres optiques de longueurs différentes. Un combineur de faisceau 48, par exemple un polariseur, est utilisé pour recombiner les premier et deuxième chemins optiques.

En fonction de la tension de modulation appliquée au modulateur optique 45, une impulsion prend soit le premier chemin optique 46 soit le deuxième chemin optique 47.

Le premier chemin optique 46 est configuré pour présenter une première valeur de retard optique, qui se traduit par un retard temporel nul entre une impulsion issue du premier amplificateur optique 81 et une impulsion issue du deuxième amplificateur optique 82, de manière à permettre la synchronisation de ces impulsions dans le milieu optique non linéaire 20. Dans ce cas, le milieu optique non linéaire 20 produit un signal converti non linéairement lorsque les impulsions prennent le premier chemin optique 46 de la ligne à retard.

Au contraire, le deuxième chemin optique 47 est configuré pour présenter une deuxième valeur de retard optique qui se traduit par un retard temporel non nul entre une impulsion issue du premier amplificateur optique 81 et une impulsion issue du deuxième amplificateur optique 82, de manière à désynchroniser, au moins partiellement et de préférence complètement, ces impulsions dans le milieu optique non linéaire 20. Dans le cas où les impulsions sont totalement désynchronisées, le milieu optique non linéaire 20 ne produit pas de signal converti non linéairement lorsque la tension de modulation appliquée dirige les impulsions vers le deuxième chemin optique 47 de la ligne à retard. Dans le cas où les impulsions sont partiellement désynchronisées, le milieu optique non linéaire 20 produit un signal converti non linéairement, dont l'amplitude est limitée en fonction de la valeur du retard induit par le deuxième chemin optique 47.

Une ligne à retard optique variable est ainsi réalisée de manière très compacte et à moindre coût.

Sur la figure 7, on a représenté un système optique non linéaire de mélange à quatre ondes, comprenant une première source laser 11, une deuxième source laser 12, une troisième source laser 13, un milieu optique non linéaire 20 et un filtre optique 30.

La première source laser 11 émet un premier signal d'impulsions source 51, la deuxième source laser 12 émet un deuxième signal d'impulsions source 52, et la troisième source laser 13 émet un troisième signal d'impulsions source 53. La troisième source laser 13 est synchronisée avec la première source laser 11.

A titre d'exemple, on considère que les trois signaux d'impulsion source 51, 52, 53 sont émis à la même fréquence de répétition et à la même longueur d'onde.

Un dispositif de contrôle et de commande du retard temporel 40 est combiné à la deuxième source laser 12. Le dispositif de contrôle et de commande du retard temporel 40 permet de contrôler le retard temporel d'une impulsion du deuxième signal 52 par rapport à une impulsion du premier signal 51 et du troisième signal 53. De manière analogue au dispositif décrit en lien avec la figure 3, le dispositif de contrôle et de commande du retard temporel 40 permet d'appliquer soit une première valeur de retard temporel, notée R1 soit une deuxième valeur de retard temporel, notée R2.

Lorsque le retard temporel est égal à la première valeur, R1, une impulsion du premier signal source 51, une impulsion du deuxième signal source 52 et une impulsion du troisième signal source 53 se superposent temporellement et spatialement dans le milieu optique non linéaire 20, de manière à générer une impulsion 60 par mélange à quatre ondes. L'impulsion 60 peut ainsi par exemple être triplée en fréquence, c'est-à-dire à une longueur d'onde égale au tiers de la longueur d'onde des impulsions source 51, 52, 53.

Au contraire, lorsque le retard temporel est égal à la deuxième valeur, R2, une impulsion 522 du deuxième signal source est retardée par rapport à une impulsion du premier signal source 51 et du troisième signal source 53, ces trois impulsions ne se recouvrent pas temporellement dans le milieu optique non linéaire 20, si bien que le mélange à quatre ondes ne peut pas se produire. Dans ce cas, en sortie du milieu optique non linéaire 20, on retrouve les impulsions du premier signal S1, du troisième signal S3 et, respectivement, du deuxième signal retardé 522.

En sortie du milieu optique non linéaire 20, le filtre 30 sépare, par exemple en polarisation et/ou spectralement sur une première voie 31 les impulsions 60 obtenues par mélange à quatre ondes, et sur une autre voie 32 les impulsions résiduelles des signaux incidents 51, 53, 522.

L'invention s'applique au mélange à N ondes d'impulsions de durée quelconque allant de la milliseconde à la femtoseconde.

L'homme du métier pourra mettre en oeuvre l'invention de façon avantageuse dans d'autres applications de mélange à N ondes, sans sortir du cadre de la présente divulgation.

## Revendications

1. Système optique non linéaire de génération ou d'amplification d'impulsions lumineuses (60, 61) par mélange à N ondes comportant un milieu optique non linéaire (20) adapté pour recevoir au moins une première impulsion lumineuse (51, 53) et une deuxième impulsion lumineuse (52, 522) ayant des durées respectives du même ordre de grandeur, **caractérisé en ce que** le système optique non linéaire de génération ou d'amplification d'impulsions lumineuses comporte :
- une source (10) adaptée pour générer un signal lumineux d'impulsions source,
- un séparateur optique de faisceau (15) configuré pour séparer le signal lumineux d'impulsions source et former un premier signal source et un deuxième signal source,
- un premier amplificateur optique (81) disposé pour recevoir le premier signal source et former la première impulsion lumineuse (51) et un deuxième amplificateur optique (82) disposé pour recevoir le deuxième signal source et former la deuxième impulsion lumineuse (52), le premier amplificateur optique (81) et le deuxième amplificateur optique (82) étant disposés sur des voies en parallèle, le milieu optique non linéaire (20) étant disposé pour recevoir le premier signal source en sortie du premier amplificateur optique (81) et respectivement le deuxième signal source en sortie du deuxième amplificateur optique (82),
- un dispositif de modulation (42) comportant une ligne à retard optique variable disposée sur le trajet optique du deuxième signal source, pour moduler un retard temporel entre la deuxième impulsion lumineuse (52) et la première impulsion lumineuse (51) dans le milieu optique non linéaire (20), le dispositif de modulation (42) du retard temporel étant disposé en amont du milieu optique non linéaire (20), et le dispositif de modulation (40, 41, 42) étant adapté pour commuter le retard temporel entre une première valeur de retard (R1) nul et, respectivement, une deuxième valeur de retard (R2) non nul de manière à désynchroniser la deuxième impulsion lumineuse (52) par rapport à la première impulsion lumineuse (51) dans le milieu optique non linéaire 20, la ligne à retard optique variable comprenant un modulateur acousto-optique ou électro-optique (45) adapté pour commuter le deuxième signal source soit vers un premier chemin optique, présentant une première valeur de retard optique associée à la première valeur de retard temporel, soit vers un deuxième chemin optique, présentant une deuxième valeur de retard optique associée à la deuxième valeur de retard temporel, de manière à moduler la génération ou l'amplification d'une impulsion lumineuse (60) par mélange à N ondes desdites au moins une première impulsion lumineuse (51) et une deuxième impulsion lumineuse dans le milieu optique non linéaire (20).

2. Système optique non linéaire de génération ou d'amplification d'impulsions lumineuses (60, 61) par mélange à N ondes selon la revendication 1 dans lequel le dispositif de modulation (40, 41, 42) du retard temporel est commutable entre la première valeur de retard (R1) et la deuxième valeur de retard (R2),
- la première valeur de retard (R1) étant configurée de manière à ce que lesdites au moins une première impulsion lumineuse (51) et une deuxième impulsion lumineuse (52) se superposent spatialement et temporellement dans le milieu optique non linéaire (20), et le milieu optique non linéaire (20) étant configuré pour générer ou amplifier une impulsion lumineuse (60) par mélange à N ondes desdites au moins une première impulsion lumineuse (51) et une deuxième impulsion lumineuse (52), où N est un nombre entier supérieur ou égal à trois, et
- la deuxième valeur de retard (R2) étant configurée de manière à ce que ladite deuxième impulsion lumineuse (522) présente un retard temporel par rapport à ladite au moins une première impulsion lumineuse (51, 53) dans le milieu optique non linéaire (20), la deuxième valeur de retard (R2) étant adaptée pour limiter la génération ou l'amplification d'impulsion lumineuse par mélange à N ondes desdites au moins une première impulsion lumineuse (51, 53) et une deuxième impulsion lumineuse (522) dans le milieu optique non linéaire (20).

3. Système selon la revendication 1 ou 2, comprenant en outre un dispositif de filtrage optique (30) disposé en sortie du milieu optique non linéaire (20), le dispositif de filtrage optique (30) étant configuré pour séparer spatialement, sur une sortie (31), l'impulsion lumineuse (60, 61) générée ou amplifiée par mélange à N ondes et, sur une autre sortie (32), la première impulsion lumineuse (51) et/ou la deuxième impulsion lumineuse (522).

4. Système selon la revendication 3 dans lequel le milieu optique non linéaire (20) est configuré pour générer une impulsion lumineuse (60) par somme de fréquence, la fréquence optique de l'impulsion lumineuse (60) générée par somme de fréquence étant égale à la somme des fréquences optiques desdites au moins une première impulsion lumineuse (51) et une deuxième impulsion lumineuse (52), et dans lequel le dispositif de filtrage optique (30) comporte un filtre spectral adapté pour séparer la fréquence optique somme des fréquences optiques respectives desdites au moins une première impulsion lumineuse (51, 53) et une deuxième impulsion lumineuse (52).

## Patentansprüche

1. Nichtlineares optisches System zur Erzeugung oder Verstärkung von Lichtimpulsen (60, 61) durch N-Wellen-Mischung mit einem nichtlinearen optischen Medium (20), das dazu ausgelegt ist, wenigstens einen ersten Lichtimpuls (51, 53) und einen zweiten Lichtimpuls (52, 522) zu empfangen, die eine jeweilige Impulsdauer der gleichen Größenordnung aufweisen,
**dadurch gekennzeichnet, daß** das nichtlineare optische System zur Erzeugung oder Verstärkung von Lichtimpulsen
- eine Quelle (10), die dazu ausgelegt ist, ein Lichtsignal aus Quellenimpulsen zu erzeugen,
- einen optischen Strahlteiler (15), der dazu ausgelegt ist, das Lichtsignal aus Quellenimpulsen zu teilen und ein erstes Quellensignal und ein zweites Quellensignal zu bilden,
- einen ersten optischen Verstärker (81), der so angeordnet ist, daß er das erste Quellensignal empfängt und den ersten Lichtimpuls (51) bildet, und einen zweiten optischen Verstärker (82), der so angeordnet ist, daß er das zweite Quellensignal empfängt und den zweiten Lichtimpuls (52) bildet, wobei der erste optische Verstärker (81) und der zweite optische Verstärker (82) auf parallelen Wegen angeordnet sind, wobei das nichtlineare optische Medium (20) so angeordnet ist, daß es das erste Quellensignal am Ausgang des ersten optischen Verstärkers (81) und entsprechend das zweite Quellensignal am Ausgang des zweiten optischen Verstärkers (82) empfängt,
- eine Modulationsvorrichtung (42), die eine variable optische Verzögerungsleitung aufweist, die auf der optischen Strecke des zweiten Quellensignals angeordnet ist, um eine zeitliche Verzögerung zwischen dem zweiten Lichtimpuls (52) und dem ersten Lichtimpuls (51) im nichtlinearen optischen Medium (20) zu modulieren, wobei die Vorrichtung (42) zum Modulieren der zeitlichen Verzögerung vor dem nichtlinearen optischen Medium (20) angeordnet ist und wobei die Modulationsvorrichtung (40, 41, 42) dazu ausgelegt ist, die zeitliche Verzögerung zwischen einem ersten Verzögerungswert (R1) Null und einem zweiten, von Null verschiedenen Verzögerungswert (R2) zu schalten, um den zweiten Lichtimpuls (52) im nichtlinearen optischen Medium (20) gegenüber dem ersten Lichtimpuls (51) asynchron zu machen, wobei die variable optische Verzögerungsleitung einen akustooptischen oder elektrooptischen Modulator (45) aufweist, der dazu ausgelegt ist, das zweite Quellensignal entweder auf einen ersten optischen Weg, der einen dem ersten zeitlichen Verzögerungswert zugeordneten ersten optischen Verzögerungswert aufweist, oder auf einen zweiten optischen Weg, der einen dem zweiten zeitlichen Verzögerungswert zugeordneten zweiten optischen Verzögerungswert aufweist, zu schalten, um die Erzeugung oder Verstärkung eines Lichtimpulses (60) durch N-Wellen-Mischung des wenigstens einen ersten Lichtimpulses (51) und einen zweiten Lichtimpulses (52) im nichtlinearen optischen Medium (20) zu modulieren,
aufweist.

2. Nichtlineares optisches System zur Erzeugung oder Verstärkung von Lichtimpulsen (60, 61) durch N-Wellen-Mischung gemäß Anspruch 1, bei dem die Vorrichtung (40, 41, 42) zum Modulieren der zeitlichen Verzögerung zwischen dem ersten Verzögerungswert (R1) und dem zweiten Verzögerungswert (R2) umschaltbar ist, wobei
- der erste Verzögerungswert (R1) so ausgelegt ist, daß der wenigstens eine erste Lichtimpuls (51) und eine zweite Lichtimpuls (52) sich im nichtlinearen optischen Medium (20) räumlich und zeitlich überlagern, und das nichtlineare optische Medium (20) dazu ausgelegt ist, einen Lichtimpuls (60) durch N-Wellen-Mischung des wenigstens einen ersten Lichtimpulses (51) und einen zweiten Lichtimpulses (52) zu erzeugen oder zu verstärken, wobei N eine ganze Zahl ist, die größer als oder gleich Drei ist, und
- der zweite Verzögerungswert (R2) so ausgelegt ist, daß der zweite Lichtimpuls (522) gegenüber dem wenigstens einen ersten Lichtimpuls (51, 53) im nichtlinearen optischen Medium (20) eine zeitliche Verzögerung aufweist, wobei der zweite Verzögerungswert (R2) dazu ausgelegt ist, die Erzeugung oder Verstärkung von Lichtimpulsen durch N-Wellen-Mischung des wenigstens einen ersten Lichtimpulses (51, 53) und einen zweiten Lichtimpulses (522) im nichtlinearen optischen Medium (20) zu begrenzen.

3. System gemäß Anspruch 1 oder 2, das außerdem eine am Ausgang des nichtlinearen optischen Mediums (20) angeordnete optische Filtervorrichtung (30) aufweist, wobei die optische Filtervorrichtung (30) dazu ausgelegt ist, an einem Ausgang (31) den durch N-Wellen-Mischung erzeugten oder verstärkten Lichtimpuls (60, 61) räumlich zu teilen und an einem anderen Ausgang (32) den ersten Lichtimpuls (51) und/oder den zweiten Lichtimpuls (52) räumlich zu teilen.

4. System gemäß Anspruch 3, bei dem das nichtlineare optische Medium (20) dazu ausgelegt ist, einen Lichtimpuls (60) durch Frequenzaddition zu erzeugen, wobei die durch Frequenzaddition erzeugte optische Frequenz des Lichtimpulses (60) gleich der Summe der optischen Frequenzen des wenigstens einen ersten Lichtimpulses (51) und einen zweiten Lichtimpulses (52) ist, und bei dem die optische Filtervorrichtung (30) einen Spektralfilter aufweist, der dazu ausgelegt ist, die optische Frequenzsumme der jeweiligen optischen Frequenzen des wenigstens einen ersten Lichtimpulses (51, 53) und einen zweiten Lichtimpulses (52) zu trennen.

## Claims

1. A non-linear optical system for generating or amplifying light pulses (60, 61) by N-wave mixing, including a non-linear optical medium (20) adapted to receive at least one first light pulse (51, 53) and one second light pulse (52, 522) having respective durations of the same order of magnitude,
**characterized in that** the non-linear optical system for generating or amplifying light pulses includes:
- a source (10) adapted to generate a source pulse light signal,
- an optical beam splitter (15) configured to separate the source pulse light signal and form a first source signal and a second source signal,
- a first optical amplifier (81) arranged to receive the first source signal and form the first light pulse (51) and a second optical amplifier (82) arranged to receive the second source signal and form the second light pulse (52), the first optical amplifier (81) and the second optical amplifier (82) being arranged in parallel channels, the non-linear optical medium (20) being arranged to receive the first source signal at the output of the first optical amplifier (81) and respectively the second source signal at the output of the second optical amplifier (82),
- a modulation device (42) including a variable optical delay line arranged in the optical path of the second source signal, to modulate a time delay between the second light pulse (52) and the first light pulse (51) in the non-linear optical medium (20), the time delay modulation device (42) being arranged upstream from the non-linear optical medium (20), and the modulation device (40, 41, 42) being adapted to switch the time delay between a first null delay value (R1) and, respectively, a second non-null delay value (R2), so as to desynchronise the second light pulse (52) relatively to the first light pulse (51) in the non-linear optical medium (20), the variable optical delay line comprising an acousto-optic or electro-optic modulator (45) adapted to switch the second source signal either towards a first optical path, having a first optical delay value associated with the first time delay value, or towards a second optical path, having a second optical delay value associated with the second time delay value, so as to modulate the generation or the amplification of a light pulse (60) by N-wave mixing of said at least one first light pulse (51) and one second light pulse in the non-linear optical medium (20).

2. The non-linear optical system for generating or amplifying light pulses (60, 61) by N-wave mixing according to claim 1, wherein the time delay modulation device (40, 41, 42) is switchable between the first delay value (R1) and the second delay value (R2),
- the first delay value (R1) being configured so that said at least one first light pulse (51) and one second light pulse (52) are spatially and temporally superimposed to each other in the non-linear optical medium (20), and the non-linear optical medium (20) being configured to generate or amplify a light pulse (60) by N-wave mixing of said at least one first light pulse (51) and one second light pulse (52), where N is an integer higher than or equal to three, and
- the second delay value (R2) being configured so that said second light pulse (522) has a time delay with respect to said at least one first light pulse (51, 53) in the non-linear optical medium (20), the second delay value (R2) being adapted to limit the generation or the amplification of the light pulse by N-wave mixing of said at least one first light pulse (51) and one second light pulse (522) in the non-linear optical medium (20).

3. The system according to claim 1 or 2, further comprising an optical filtering device (30) arranged at the output of the non-linear optical medium (20), the optical filtering device (30) being configured to spatially separate, to one output (31), the light pulse (60, 61) generated or amplified by N-wave mixing and, to another output (32), the first light pulse (51, 53) and/or the second light pulse (522).

4. The system according to claim 3, wherein the non-linear optical medium (20) is configured to generate a light pulse (60) by sum frequency, the optical frequency of the light pulse (60) generated by sum frequency being equal to the sum of the optical frequencies of said at least one first light pulse (51) and one second light pulse (52), and wherein the optical filtering device (30) includes a spectral filter adapted to separate the sum optical frequency from the respective optical frequencies of said at least one first light pulse (51, 53) and one second light pulse (52).
